# EUROPEAN PATENT SPECIFICATION

(11) **EP 1 742 469 B1**
(45) Date of publication and mention of the grant of the patent: **12.04.2017**
(21) Application number: 06253563.8
(22) Date of filing: 07.07.2006
(51) Int. Cl.: H04N 5/64, F16M 11/00, F16M 13/00

(54) **Supporting apparatus for display device**
Stützgerät für Anzeigevorrichtung
Dispositif de support pour un dispositif d'affichage

(30) Priority: 08.07.2005 KR 20050061761
(43) Date of publication of application: 10.01.2007
(73) Proprietor: LG Electronics Inc., Youngdungpo-Gu Seoul (KR)
(72) Inventor: Jung, Yu Young, 202-1308 Wooband Shincheonji Apt., Chilgoak-gun, Gyeongsangbook-do (KR); Kim, Chan Han, 108-1602, Woobang Shinsegye Town, Sangmoo-dong,Goomi-si, Gyeongsangbook-do (KR)
(74) Representative: Hale, Peter

(56) References cited:
- EP-A2- 1 331 432
- EP-A2- 1 401 200
- WO-A-03/036950
- US-A- 5 207 405
- US-A1- 2002 179 791
- US-A1- 2002 179 801
- US-A1- 2005 127 253
- US-B1- 6 402 109

## Description

The present invention relates to a supporting apparatus for a display device. It more particularly relates to a supporting apparatus for a display device, in which a rotational angle and direction of the display device attached on a wall surface are freely set, and allowing all kinds of display devices to be mounted regardless of their standards.

Generally, display devices include televisions (TVs) and computer monitors. Recently, flat TV monitors have been produced, such as plasma display panels (PDPs) and liquid crystal display devices (LCDs), and are being manufactured in much greater sizes than those of conventional cathode ray tubes (CRTs). The current trend is to increase the utility of indoor spaces and allow a display device to be installed at a position suitable for the height of a viewer's eye by mounting the display device on a wall surface. In accordance with this trend, various adjusting apparatuses have emerged to allow free adjustment of a display device's angle mounted on a wall surface. With these adjusting apparatuses, it is possible to provide an optimized screen even when a viewer is located at a lower position at a predetermined angle from the front side of the display device.

Various kinds of angle adjusting apparatuses for display devices are currently sold in the market, but prior art angle adjusting apparatuses are heavy and have a large volume in order to support a large-sized display device. Also, there is a limitation in adjusting the angle of a display device attached on a wall surface. In other words, according to a prior art angle adjusting apparatus, a display device is adjusted only in a vertical direction and not in a back-and-forth direction. Also, it frequently happens that a display device becomes detached from the angle adjusting apparatus by its own weight and is destroyed.

Also, various prior art angle adjusting apparatuses have been individually manufactured for respective standards of display devices in order to easily support display devices brought to the market in a variety of standards. Therefore, as standards of display devices become more diverse, a variety of different angle adjusting apparatuses need to be manufactured.

The present invention seeks to provide an improved supporting apparatus for a display device.

Embodiments of the invention can provide a supporting apparatus for a display device, in which the weight of the supporting apparatus is reduced so that a viewer or a technician may easily install the supporting apparatus, and which is capable of mounting display devices of the majority, if not all, standards brought to the market.

Embodiments of the invention can provide a supporting apparatus for a display device, which allows a user to easily adjust the angle of a heavy display device using light force.

Embodiments of the invention can provide a supporting apparatus for a display device, allowing a viewer to adjust an angle of the display device in a vertical direction and a back-and-forth direction.

Embodiments of the invention can provide a supporting apparatus for a display device which is capable of reducing manufacturing costs by reducing the number of parts used for its manufacture.

Advantages and features of embodiments of the invention will be set forth in the description which follows, and will become apparent to those having ordinary skill in the art upon examination of the following or may be learned from practice of the invention.

United States published patent application US 2005/0127253 A1 discloses a mount apparatus for an image displaying device which includes: a set engaging unit engaged to a rear surface of the image displaying device; a fixing unit fixed to a fixed surface; an upper connecting unit engaged with an upper portion of the set engaging unit to vertically rotate with respect to the upper portion of the set engaging unit, and slidably engaged to the fixing unit, thereby vertically rotating with respect to the upper portion of the set engaging unit depending on an up and down control of the image displaying device while varying an interval between the upper portion of the set engaging unit and the fixing unit; and a lower connecting unit for connecting a lower portion of the set engaging unit with the fixing unit and engaged with the lower portion of the set engaging unit to vertically rotate with respect to the lower portion of the set engaging unit.

United States published patent application US 2002/0179801 A1 discloses a grade control apparatus of display set for tapestry. The apparatus includes at least two guide brackets attached to a wall; holding-down brackets for holding a display device, each having one end being pivotably connected to one end of the corresponding guide bracket; adjusting link transmission shafts installed within each guide bracket, each having one end on which a bevel gear is installed and the other end on which a shifting boss is installed; an angle adjustable shaft being installed between the guide brackets and having gears for being engaged with each bevel gear; and an angle adjustable hand lever for receiving an external force, the angle adjustable hand lever being formed on at least one angle adjustable shaft. The present invention easily adjusts the angle of the display device so as to comply with a user's wishes, and finely adjusts the angle of the display device by a small force.

PCT published patent application WO 03/036950 A1 discloses a wall-mounting device for a television which includes: a base fixed on a wall; channels fixed at both sides of the base; mounting members hinged at a lower end of the channel; fixing members coupled to the mounting members for fixing the television; restricting brackets located at inner and lower ends of the mounting members, each restricting bracket having a stop hole for restricting a stop pin formed integrally on the fixing member; levers for connecting the channel with a central portion of the mounting member; and angle controlling means provided between the channel and the lever, wherein a motor is mounted and fixed at a side of the control shaft of the angle controlling means and on the base to rotate the control shaft and control an angle, the motor being operated through operation means such as a manipulation switch or a remote controller.

United States patent 5,207,405 discloses a TV stand for supporting various sized TV sets at the optimal angle for viewing while lying in a bed, for supporting the TV at the optimal the height, for concealing the wiring of the set, and for minimizing the floor space occupied by the stand.

United States published patent application US 2002/0179791 A1 discloses an apparatus for adjusting an angle of a display means, which easily controls the view angle of the display so as to comply with a user's wishes, and a connection bracket of the apparatus. The apparatus for adjusting a angle of a display means includes a fixing bracket fixed to a wall or a supporter; two guide brackets; connection brackets; a flap-fixing bracket being attached to a designated area of the fixing bracket; a flap comprising two pieces crossing each other; a balance shaft for adjusting a angle of the connection bracket; and an angle adjustable shaft being connected to one end of the flap and including means for adjusting the spreading and folding of the flap. The connection bracket includes a product bracket including means for being fixed to one surface of the display means and means for being fixed to a holding-down bracket; and a holding-down bracket including means for being easily attached to and separated from the product bracket. The present invention easily adjusts the angle of the display means so as to comply with a user's wishes, and finely adjusts the angle of the display means by a small force.

European patent application EP 1 401 200 A2 discloses a display system which includes installation equipment for mounting a display main body onto an installation surface, includes a link assembly including a second link having a first end rotatably attached to the installation surface, a first link having a first end rotatably attached to the display main body and a second end rotatably attached to a second end of the second link, and a spring member provided in at least one joint area of the first and second links and elastically biasing the display main body toward a wall; a lower supporting bracket attached to the installation surface and rotatably supporting a lower back of the display main body; and an upper supporting bracket attached to the installation surface and supporting the link assembly.

EP 1331432 A2 discloses a device suitable for suspending a flat panel display screen. The device includes a carrier and an intermediate plate. The intermediate plate further comprises a resilient strip extending substantially parallel to the intermediate plate, which is provided with a pin movable against spring force from a first position, in which it is disposed in an opening in the carrier, to a second position, in which it is disposed outside said opening.

US 6402109 B1 discloses a self-balancing mounting system for a flat panel display including a first bracket having a first pivot point and a second bracket having a first sliding pivot mechanism with a sliding range of motion located below the first pivot point relative to a vertical axis. The second bracket includes a range of motion between a generally vertical position and a tipped forward position. A minor arm having a first end is pivotally attached to the first pivot point on the first bracket and a second end is pivotally engaged with the first sliding pivot mechanism on the second bracket such that a first force causing the second bracket to tip forward biases the second end of the minor arm upward in the first sliding pivot mechanism. A major arm having a first end is pivotally attached to the minor arm at a location between the first and second ends of the minor arm and a second end is mechanically coupled to the second bracket at a location below the first sliding pivot mechanism such that a second force on major arm biases the second end of the minor arm downward in the first sliding pivot mechanism.

One aspect of the invention provides a supporting apparatus for a display device according to claim 1.

Other aspects of the invention are defined in the sub-claims.

With such a construction, it is possible to adjust an angle of a display device in multiple directions and conveniently install display devices of different sizes by freely adjusting the width of the supporting apparatus depending on the size of the display device.

It is to be understood that both the foregoing general description and the following detailed description of the present invention are exemplary and explanatory and are intended to provide further explanation of the invention as claimed.

Exemplary embodiments of the invention will now be described by way of non-limiting example only, with reference to the drawings, in which:
FIG. 1 is an exploded perspective view of a supporting apparatus for a display device according to the present invention;
FIG. 2 is an exploded perspective view of a hanger assembly according to the present invention;
FIG. 3 is a perspective view illustrating an upper link and a lower link are coupled to a channel bracket according to the present invention;
FIG. 4 is an exploded perspective view of a channel bracket, an upper link, and a lower link;
FIG. 5 is a perspective view of a supporter assembly according to the present invention;
FIG. 6 is a perspective view of a supporter guide according to the present invention;
FIG. 7 is a perspective view of a moving supporter constituting a supporter assembly;
FIG. 8 is a perspective view of a supporting apparatus when a display device is closely attached on a wall surface;
FIG. 9 is a perspective view of a supporting apparatus when a display device is tilted upward;

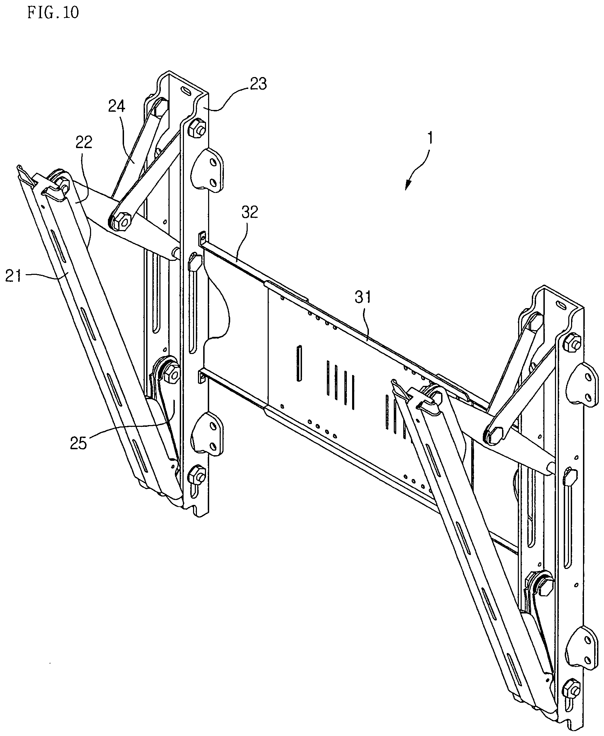

FIG. 10 is a perspective view of a supporting apparatus when a display device is tilted downward; and

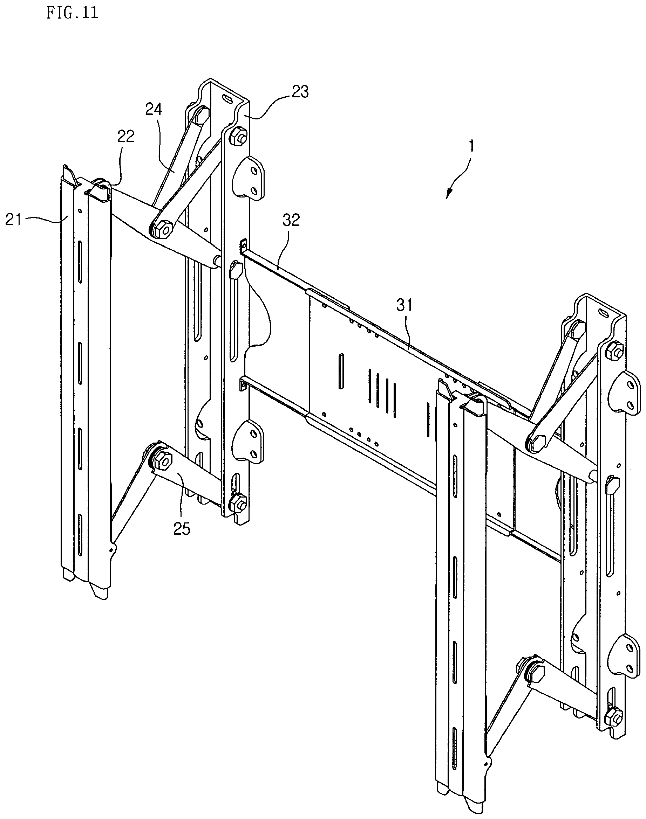

FIG. 11 is a perspective view of a supporting apparatus when a display device is disposed a predetermined distance to the front from a wall surface.

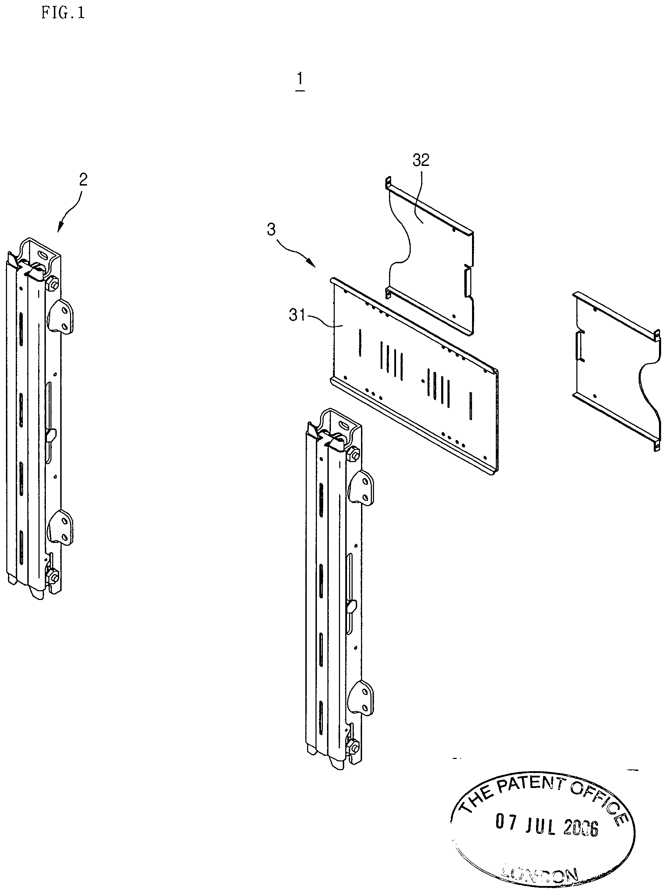

Referring to FIG. 1, the supporting apparatus 1 includes a pair of hanger assemblies 2 fixedly attached on a wall surface and allowing a display device to be mounted on a front side of the hanger assemblies 2, and a supporter assembly 3 having both ends coupled to lateral sides of a pair of the hanger assemblies 2 and adjusting the width of the hanger assemblies 2.

In detail, the supporter assembly 3 includes a supporter guide 31 of a predetermined standard and a moving supporter 32 mounted on the backside of the supporter guide 31 to move horizontally. Each of the hanger assemblies 2 is formed by assembling a plurality of parts to allow angle adjustment and movement vertically or back/forth direction, which will be described in detail later.

Respective elements constituting the supporting apparatus 1 will be described in detail below.

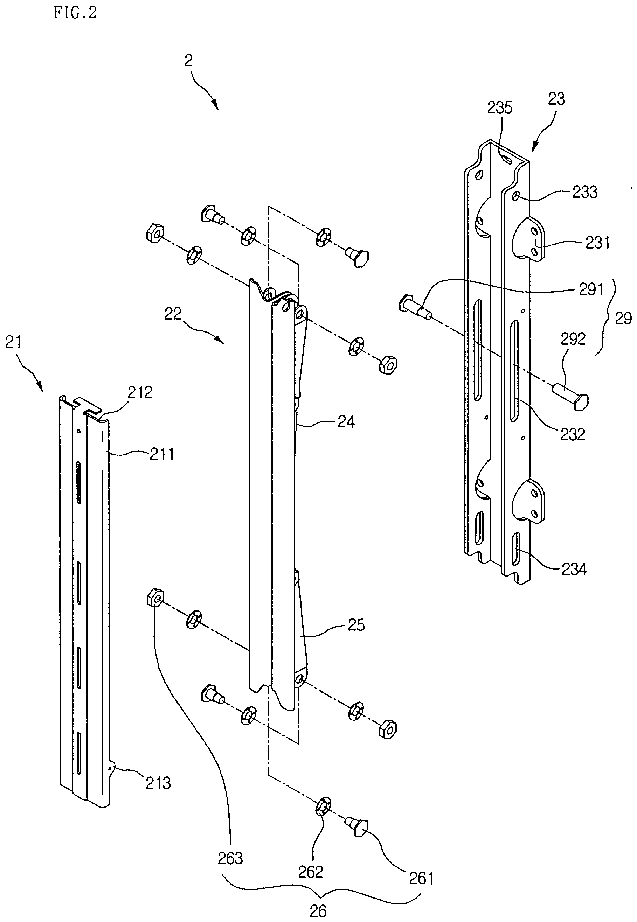

Referring to FIG. 2, the hanger assembly 2 includes: a wall bracket 23 attached on a wall surface; a channel bracket 22 rotatably mounted on the front side of the wall bracket 23; a set bracket 21 coupled to the front side of the channel bracket 22 in a sliding manner and on which a display device is mounted; an upper link 24 and a lower link 25 for connecting the wall bracket 23 with the channel bracket 22; and fastening members 26 for allowing the upper link 24 and the lower link 25 to be rotatably coupled to the wall bracket 23.

In detail, the wall bracket 23 includes a rectangular plate whose both ends are bent such that a cross-section of the rectangular plate forms a " 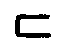 " shape. A rising hole 232 having a predetermined length is formed in the bent lateral side of the wall bracket 23 to allow a rising member 29 connecting the upper link 24 with the wall bracket 23 to move vertically. A coupling hole 233 allowing coupling of a link guide, which will be described later, of the upper link 24 is formed in the upper portion of the bent lateral side of the wall bracket 23. A coupling hole 234 allowing coupling of a link guide of the lower link 25 is formed in the lower portion of the bent lateral side of the wall bracket 23. At least one coupling hole 235 is formed in the front side of the wall bracket 23 to firmly fix the wall bracket 23 on the wall surface. Coupling ends 231 are formed in both sides of the wall bracket 23, respectively, to more reliably fix the wall bracket 23 on the wall surface. In detail, the coupling ends 231 are formed by cutting part of the wall bracket 23 in a predetermined size and bending the cut part with respect to a line passing through an edge of the wall bracket 23. Therefore, a cut hole corresponding to the size of the coupling ends 231 is formed in each of the bent lateral sides of the wall bracket 23.

Also, the set bracket 21 is formed by bending both lateral sides and an upper surface in predetermined widths. In detail, a guide surface 211 bent several times is formed on each of both lateral sides of the set bracket 21, and a coupling end 213 protrudes in a predetermined length at the lower end of the guide surface 211. The coupling end 213 includes a coupling hole having a predetermined diameter. A coupling member such as a screw passes through the coupling hole, thereby coupling the set bracket 21 to the channel bracket 22. A guide groove 212 having a shape bent in a predetermined angel is formed in the upper surface of the set bracket 21 to allow the channel bracket 22 to be inserted into the set bracket 21 in a sliding manner. A method of coupling the channel bracket 22 to the set bracket 21 will be described later.

Also, the coupling member 26 for coupling the upper and lower links 24 and 25 to the wall bracket 23 includes a coupling bolt 261 passing through the coupling hole 234 formed in one of the bent later sides of the wall bracket 23, a coupling nut 263 coupled on the outer periphery of the coupling bolt 261, and a washer 262 fitted between the coupling bolt 261 and the coupling nut 263.

Also, the rising member 29 includes a rising bolt 292 having an end whose outer periphery is threaded in a predetermined length, and a rising nut 291 having a nut portion for receiving the threaded portion formed in the rising bolt 292.

With the above-described construction, when a viewer adjusts an angle of a display device mounted on the front side of the set bracket 21 vertically or back and forth direction, the channel bracket 22 rotates clockwise or counterclockwise, or in the back and forth direction with respect to the wall bracket 23. Also, the rising member 29 connecting the upper link 24 with the wall bracket 23 moves vertically along the rising hole 232 as the channel bracket 22 moves.

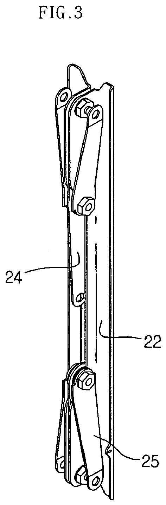

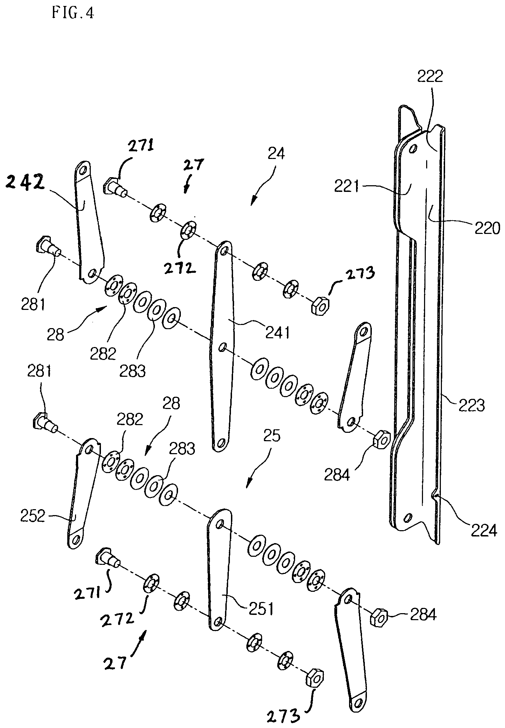

Referring to FIGs. 3 and 4, a channel bracket 22 is rotatably connected to the wall bracket 23 using the upper and lower links 24 and 25.

In detail, the channel bracket 22 includes a pair of moving brackets 220 arranged to be symmetrical to each other and forming the same shape. Also, part of the upper and lower links 24 and 25 is inserted to a portion where the moving brackets 220 contact each other, and a pair of the moving brackets 220 are integrally coupled to the upper and lower links 24 and 25 through the coupling member 28.

In more detail, the moving brackets 220 constituting the channel bracket 22 includes a link coupling end 221 having one side bent in a predetermined width, a slider 222 having one end bent in a predetermined width, and a coupling end 224 protruding at the lower end of the slider 222 to couple to the coupling end 213 (of FIG. 2) of the set bracket 21. A coupling hole is formed in the link coupling end 221, and the upper and lower links 24 and 25 are connected with the channel bracket 22 through the coupling member 28 passing through the coupling hole. Also, the set bracket 21 is seated on the front side of a pair of the moving brackets 220, so that the moving brackets 220 are integrally coupled to each other.

Also, the upper link 24 coupled to the upper portion of the channel bracket 22 includes an upper center link 241 formed in a predetermined length and having both ends in each of which a coupling hole is formed, and two link guides 242 coupled to both sides of the upper center link 241 and having one end rotatably coupled to a central portion of the upper center link 241. In detail, the link guides 242 and the upper center link 241 are coupled to each other through the coupling member 28. Also, the coupling member 28 includes a plurality of spacers 282 and spring washers 283 inserted between one end of the link guides 242 and the upper center link 241, a coupling bolt 281 passing through the upper center link 241, the link guides 242, the spacers 282, and the spring washers 283, and a coupling nut 284 fitted on the outer periphery of the coupling bolt 281. Here, the spacers 282 and the spring washers 283 intervening between the link guides 242 and the upper center link 241 minimize abrasion of a coupling portion. It is possible to control rotational force of the link guide 242 by controlling fastening degree of the coupling bolt 281. The rotational force is appropriately determined by the weight of a display device mounted.

In more detail, the other end of the link guides 242 is rotatably coupled to the wall bracket 23. Also, one end of the upper center link 241 is inserted into a portion where the link coupling ends 221 of the moving bracket 220 contacts each other. The upper end of the upper center link 241, and the link coupling end 221 of the moving bracket 220 are integrally coupled through a coupling member 27. The other end of the link guides 242 is connected with the coupling hole 233 of the wall bracket 23, and one end of the upper center link 241 is inserted between the link coupling ends 221. Also, the coupling member 27 is inserted into coupling holes formed in the upper portion of the link coupling ends 221. Here, the coupling member 27 includes a coupling bolt 271 passing through the upper center link 241, and the link coupling ends 221, and a washer 272 fitted on the end of the upper center link 241, for reducing friction force, and a nut 273 fitted on the outer periphery of the coupling bolt 271.

Also, the other end of the upper center link 241 moves vertically along a rising hole 232 formed in each of bent lateral sides of the wall bracket 23 through the rising member 29. In detail, the rising nut 291 and the rising bolt 292 passes through the coupling hole formed in the other end of the upper center link 241 and the rising hole 232 to allow the other end of the upper center link 241 to be movably coupled to the wall bracket 23.

Also, the lower link 25 for connecting a lower end of the channel bracket 22 with the wall bracket 23 includes a lower center link 251 and two link guides 252 coupled to both sides of the lower center link 251.

In detail, coupling holes are formed in both ends of the link guides 252 and the lower center link 251 so that a coupling member may pass therethrough. Also, one end of the link guides 252 is rotatably coupled to one end of the lower center link 251 using the coupling member 28. Also, the other ends of the link guides 252 are coupled to the bent sides of the wall bracket 23, respectively. The other end of the lower center link 251 is rotatably coupled to the channel bracket 22 through the coupling member 27. Here, the lower center link 251 is coupled to the channel bracket 22 in the same way as one end of the upper center link is coupled to the channel bracket 22. The way in which the coupling member 28 intervenes between lower center link 251 and the link guide 252 is the same as the way in which the coupling member 28 intervenes between the upper center link 241 and the link guides 242 of the upper link 24.

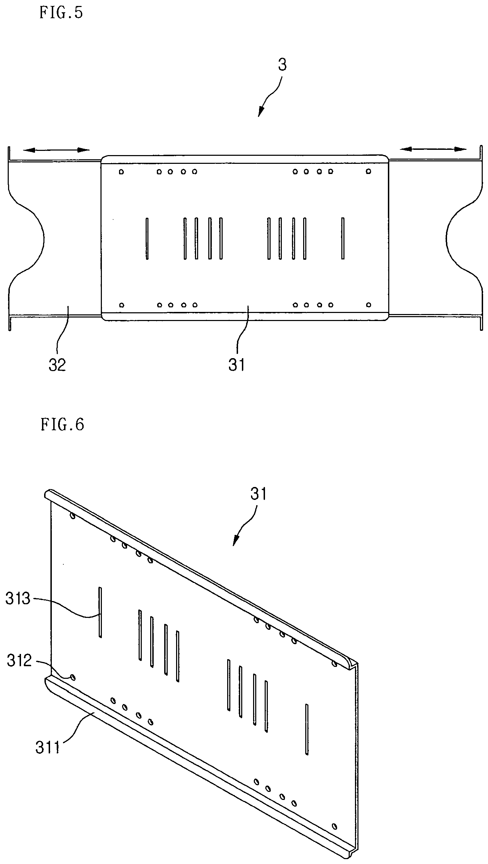

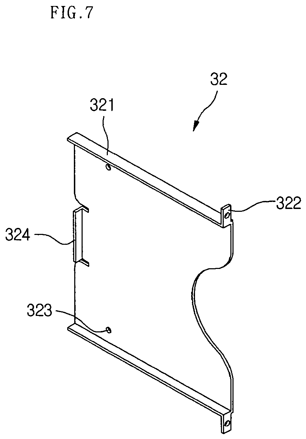

Referring to FIGs. 5 and 7, a supporter assembly 3 includes a supporter guide 31 and moving supporters 32. Both ends of the moving supporters 32 are coupled to the hanger assembly 2.

In detail, two moving supporters 32 are mounted on the backside of the supporter guide 31 and movable horizontally along the supporter guide 31. Therefore, it is possible to appropriately control the width of the hanger assembly 2 depending on a standard of a display device mounted by allowing the moving supporters 32 to be drawn out toward both ends of the supporter guide 31, or to contract toward the inner side of the supporter guide 31.

In more detail, the support guide 31 has an approximately rectangular shape and includes: guides 311 formed by bending an upper end and a lower end of the support guide 31 at least one time; fixing holes 312 formed at a constant interval along the upper and lower portions; and a slot 313 formed at a predetermined length with a constant interval in the central portion.

Also, each of the moving supporters 32 includes a slider 321 formed by bending an upper portion and a lower portion of the moving supporters 32 at a predetermined angle, hanger coupling ends 322 having one end vertically bent, for being attached on the wall bracket 23, an interval control rib 324 formed by bending the other side of the moving supports 32 in a predetermined length, for being inserted into the slot 313, and fixing holes 323 symmetrically formed in the upper and lower sides of the moving supporters 32.

In detail, a coupling member or a fixing pin is inserted into the fixing holes 323 formed in the moving supporter 32 and the fixing holes 312 formed in the supporter guide 31, and the interval control rib 324 is inserted into the slot 313, so that the moving supporters 32 are fixed in the supporter guide 31.

In more detail, the slider 321 of each moving supporters 32 face-contacts the guide 311 of the supporter guide 31 and slides horizontally.

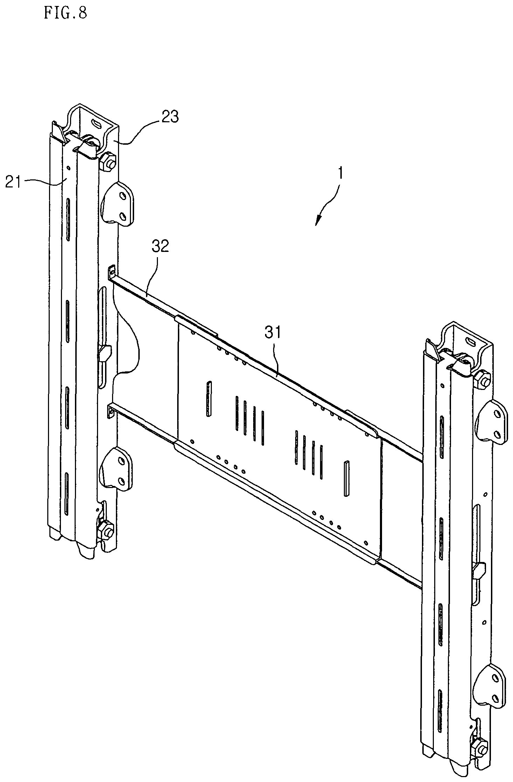

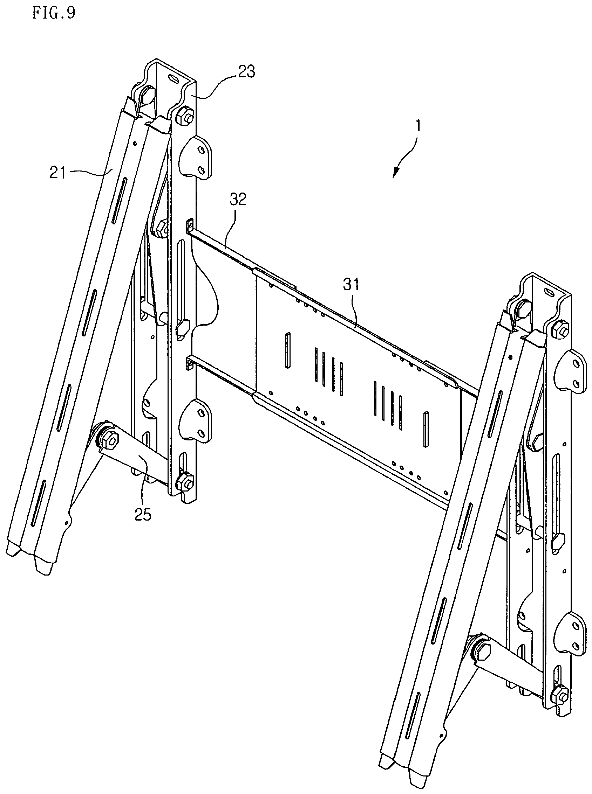

Referring to FIGs. 8 and 9, a supporting apparatus allows the hanger assembly 2 to be appropriately transformed depending on the tilt state of the display device.

In detail, it is possible to maintain a spacing of the hanger assembly 2 by adjusting the width of the supporter assembly 3 suitably for a standard of a display device before the display device is mounted in the supporting apparatus 1.

When a viewer presses a display device towards the wall in order to completely attach the display device on the wall surface, the channel bracket 22 is completely housed inside the wall bracket 23. Then, the front side of the set bracket 21 becomes approximately the same height as that of the bent lateral sides of the wall bracket 23.

Also, the lower end of the display device is rotated upwards in order to allow the display device to maintain a position rotated upwards at a predetermined angle. Then, the channel bracket 22 is obliquely rotated at a predetermined angle, and the lower link 25 spreads to subtend a predetermined angle. That is, the distance between the ends of the link guides 252 and the lower center link 251 of the lower link 25 is widened to subtend a predetermined angle between the links. Here, friction force generated at a coupling portion between the lower center link 251 and the link guides 252 may be appropriately controlled by fastening force of the coupling member. In other words, the friction force generated at the lower link 25 needs to be at least equal to or greater than the moment generated by the weight of a display device in order to allow the display device to maintain a tilted upward state.

Also, the upper end of the display device is rotated in order to allow the display device to maintain a state rotated downward at a predetermined angle. Then, the channel bracket 22 is obliquely rotated at a predetermined angle, and the upper center link 241 and the link guides 242 of the upper link 24 spread at a predetermined angle.

In detail, the end of the upper center link 241 that is connected with the rising hole 232 of the wall bracket 23 rises along the rising hole 232. Also, the link guides 242 rotate clockwise around a point where the link guides 242 are coupled to the wall bracket 23. The display device rotates downward until the rising member 29 coupled to the upper center link 241 contacts the upper end of the rising hole 232.

Here, appropriate control of friction force generated at a point where the upper center link 241 is coupled to the link guides 242 by controlling fastening force of the coupling member 28 may prevent the display device from rotating to the front by itself due to its own weight. In other words, the friction force generated between the upper center link 241 and the link guides 242 should be at least equal to or greater than moment generated by the weight of the display device in order to allow the display device to maintain a state rotated at an angle desired by a viewer.

Also, a viewer pulls the display device in order to separate the display device a predetermined distance from a wall surface. Then, the channel bracket 22 moves to the front in a vertical state.

In detail, the end of the upper center link 241 of the upper link 24 rises along the rising hole 232, and simultaneously, the lower center link 251 and the link guides 252 of the lower link 25 spread a predetermined angle.

As is apparent from the above descriptions, a viewer may freely and sufficiently manipulate an angle of a display device with small force.

According to a supporting apparatus for a display device having the above-described construction, a viewer or a technician may easily install the supporting apparatus, and display devices of all standards brought to the market may be mounted on the supporting apparatus.

Also, a viewer may easily adjust an angle of a heavy display device with small force.

Also, the angle of a display device may be adjusted vertically and back-and-forth direction, and a display device is not hung down by its own weight or not detached from a supporting apparatus even when the display device protrudes to the front.

It will be apparent to those skilled in the art that various modifications and variations can be made in accordance with the present invention. Thus, it is intended that the present invention covers the modifications and variations provided they come within the scope of the appended claims.

## Claims

1. A supporting apparatus for a display device, the supporting apparatus comprising:
first and second hanger assemblies (2) spaced apart in a horizontal direction and arranged to allow the vertical angle of a display device attached thereto to be adjusted; and
a supporter assembly (3), at opposite sides of which the hanger assemblies (2) are attached, the supporter assembly (3) including:
a supporter guide (31); and
a pair of movable supporters (32), the first movable supporter coupled between the first hanger assembly and the supporter guide (31) and the second movable supporter coupled between the second hanger assembly and the supporter guide (31), the pair of movable supporters (32) movable horizontally along the supporter guide (31) to adjust the distance between the first and second hanger assemblies (2),
wherein each hanger assembly (2) comprises:
a wall bracket (23) fixed to a wall surface and coupled to an end of one of the pair of movable supporters (32);
a channel bracket (22) rotatably connected with the wall bracket (23) and capable of being spaced a predetermined distance from the wall bracket (23);
an upper link (24) and a lower link (25) arranged to respectively connect upper and lower portions of the wall bracket (23) with upper and lower portions of the channel bracket (22); and
a set bracket (21) coupled to the channel bracket (22), and having a front side adapted to mount the display device thereon,
**characterized in that** the upper link (24) includes:
an upper center link (241) formed in a predetermined length and having one end coupled to the wall bracket (23) and the other end coupled to the channel bracket (22); and
a pair of upper link guides (242), the first upper link guide having a first end rotatably coupled to the wall bracket (23) and a second end rotatably coupled to one side of a central portion of the upper center link, and the second upper link guide having a first end rotatably coupled to the wall bracket (23) and a second end rotatably coupled to the other side of the central portion of the upper center link (241),
wherein the lower link (25) includes:
a lower center link (251) having one end coupled to the channel bracket (22);
a pair of lower link guides (252), each having a first end coupled to the wall bracket (23) and a second end rotatably coupled to the other end of the lower center link (251), and wherein the pair of lower link guides (252) are coupled to both sides of the lower center link (251).

2. The apparatus according to claim 1, wherein the channel bracket (22) comprises two bracket members facing and coupled to each other,
wherein the channel bracket (22) is coupled to a rear portion of the set bracket (21).

3. The apparatus according to claim 2, wherein the set bracket (21) is arranged to be slidably inserted in a front side of the channel bracket (22).

4. The apparatus according to any one of claims 2 and 3, wherein the set bracket (21) is coupled to the channel bracket (22) using a separate coupling member.

5. The apparatus according to claim 1, wherein movement of the movable supporter (32) and the supporter guide (31) is relatively guided by a bending portion formed at each edge of the movable supporter (32) and the supporter guide (31).

6. The apparatus according to claim 1 or 5, wherein the moving supporter (32) is coupled to an inner side of the hanger assembly (2).

7. The apparatus according to any one of claims 1 or 5 or 6, wherein the moving supporter (32) is movable in a horizontal direction of the supporter guide (31) to a position where the display device can be coupled to the hanger assembly (2).

8. The apparatus according to claim 2, wherein the wall bracket (23) includes:
a rising hole (232) having a predetermined length and formed in each of bent lateral sides thereof; and
a coupling hole (234) formed in a lower portion of the bent lateral sides thereof, the coupling hole (234) having a predetermined length shorter than the rising hole (232),
wherein the one end of the upper center link (241) is coupled to the rising hole (232) by a rising member (29) to move up and down,
and wherein the one ends of the pair of link guides (252) are coupled to the coupling hole (234) by a coupling member (27).

9. The apparatus according to claim 1, further comprising means to adjust a friction force generated between the upper link (24) and the lower link (25).

10. The apparatus according to claim 1, further comprising:
an interval control part (324) formed on one side of the movable supporters (32); and
at least two slots (313) formed in the supporter guide (31), arranged to selectively receive the interval control part (324) to fix the movable supporters (32) in position.

11. The apparatus according to claim 10, further comprising at least one fixing hole (312)(323) formed in the movable supporters (32) and the supporter guide (31), such that a fixing member can sequentially pass through the movable supporters (32) and the supporter guide (31) to allow the movable supporters (32) to be fixed in the supporter guide (31).

## Patentansprüche

1. Haltevorrichtung für eine Anzeigevorrichtung, wobei die Haltevorrichtung aufweist:
erste und zweite Hängeanordnungen (2), die in horizontaler Richtung beabstandet und dazu angeordnet sind zu ermöglichen, dass der vertikale Winkel einer daran befestigten Anzeigevorrichtung eingestellt wird; und
eine Halteanordnung (3) an deren gegenüberliegenden Seiten die Hängeanordnungen (2) befestigt sind, wobei die Halteanordnung (3) aufweist:
eine Trägerführung (31); und
ein Paar bewegbarer Träger (32), wobei der erste bewegbare Träger zwischen die erste Hängeanordnung und die Trägerführung (31) geschaltet ist und der zweite bewegbare Träger zwischen die zweite Hängeanordnung und die Trägerführung (31) geschaltet ist, wobei das Paar bewegbarer Träger (32) entlang der Trägerführung (31) horizontal bewegbar ist, um den Abstand zwischen den ersten und zweiten Hängeanordnungen (2) einzustellen,
wobei jede Hängeanordnung (2) aufweist:
eine Wandhalterung (23), die an einer Wandfläche befestigt und mit einem Ende eines des Paars bewegbarer Träger (32) verbunden ist;
eine Kanalhalterung (22), die drehbar mit der Wandhalterung (23) verbunden und dazu ausgelegt ist, einen vorgegebenen Abstand von der Wandhalterung (23) beabstandet zu werden;
ein oberes Gelenk (24) und ein unteres Gelenk (25), die dazu ausgelegt sind, obere bzw. untere Abschnitte der Wandhalterung (23) mit oberen bzw. unteren Abschnitten der Kanalhalterung (22) zu verbinden; und
eine Gerätehalterung (21), die mit der Kanalhalterung (22) verbunden ist und eine Vorderseite hat, die dazu ausgelegt ist, die Anzeigevorrichtung daran anzubringen,
**dadurch gekennzeichnet, dass** das obere Gelenk (24) aufweist:
ein oberes Mittelgelenk (241), das in vorgegebener Länge ausgebildet ist, und dessen eines Ende mit der Wandhalterung (23) verbunden ist und dessen anderes Ende mit der Kanalhalterung (22) verbunden ist; und
ein Paar oberer Gelenkführungen (242), wobei die erste obere Gelenkführung ein erstes Ende hat, das drehbar mit der Wandhalterung (23) verbunden ist, und ein zweites Ende, das drehbar mit einer Seite eines mittleren Abschnitts des oberen Mittelgelenks verbunden ist, und wobei die zweite obere Gelenkführung ein erstes Ende hat, das drehbar mit der Wandhalterung (23) verbunden ist, und ein zweites Ende, das drehbar mit der anderen Seite des mittleren Abschnitts des oberen Mittelgelenks (241) verbunden ist,
wobei das untere Gelenk (25) aufweist:
ein unteres Mittelgelenk (251), dessen eines Ende mit der Kanalhalterung (22) verbunden ist;
ein Paar unterer Gelenkführungen (252), von denen jeweils ein erstes Ende mit der Wandhalterung (23) verbunden ist und ein zweites Ende drehbar mit dem anderen Ende des unteren Mittelgelenks (251) verbunden ist, und wobei das Paar unterer Gelenkführungen (252) mit beiden Seiten des unteren Mittelgelenks (251) verbunden ist.

2. Vorrichtung nach Anspruch 1, wobei die Kanalhalterung (22) zwei Halterungsteile aufweist, die einander zugewandt und miteinander verbunden sind,
wobei die Kanalhalterung (22) mit einem hinteren Abschnitt der Gerätehalterung (21) verbunden ist.

3. Vorrichtung nach Anspruch 2, wobei die Gerätehalterung (21) dazu ausgelegt ist, gleitend in eine Vorderseite der Kanalhalterung (22) eingeführt zu werden.

4. Vorrichtung nach einem der Ansprüche 2 und 3, wobei die Gerätehalterung (21) mittels eines separaten Verbindungsteils mit der Kanalhalterung (22) verbunden ist.

5. Vorrichtung nach Anspruch 1, wobei die Bewegung des bewegbaren Trägers (32) und der Trägerführung (31) jeweils durch einen Biegeabschnitt geführt wird, der an jeder Kante des bewegbaren Trägers (32) und der Trägerführung (31) ausgebildet ist.

6. Vorrichtung nach Anspruch 1 oder 5, wobei der bewegbare Träger (32) mit einer Innenseite der Hängeanordnung (2) verbunden ist.

7. Vorrichtung nach einem der Ansprüche 1 oder 5 oder 6, wobei der bewegbare Träger (32) in horizontaler Richtung der Trägerführung (31) in eine Position bewegbar ist, an der die Anzeigevorrichtung mit der Hängeanordnung (2) verbunden werden kann.

8. Vorrichtung nach Anspruch 2, wobei die Wandhalterung (23) aufweist:
ein Aufwärtsbohrloch (232), das eine vorgegebene Länge hat und in jeder gebogenen lateralen Seite davon ausgebildet ist; und
ein Verbindungsloch (234), das in einem unteren Abschnitt der gebogenen lateralen Seiten davon ausgebildet ist, wobei das Verbindungsloch (234) eine vorgegebene Länge hat, die kürzer als das Aufwärtsbohrloch (232) ist,
wobei das eine Ende des oberen Mittelgelenks (241) durch ein Aufwärtselement (29) mit dem Aufwärtsbohrloch (232) verbunden ist, um sich auf und ab zu bewegen,
und wobei die einen Enden des Paars von Gelenkführungen (252) durch ein Verbindungsteil (27) mit dem Verbindungsloch (234) verbunden sind.

9. Vorrichtung nach Anspruch 1, die des Weiteren Mittel zum Einstellen einer Reibungskraft aufweist, die zwischen dem oberen Gelenk (24) und dem unteren Gelenk (25) erzeugt wird.

10. Vorrichtung nach Anspruch 1, die des Weiteren aufweist:
ein Abstandssteuerungsteil (324), das an einer Seite der bewegbaren Träger (32) ausgebildet ist; und
wenigstens zwei Schlitze (313), die in der Trägerführung (31) ausgebildet und dazu ausgelegt sind, das Abstandssteuerungsteil (324) selektiv aufzunehmen, um die bewegbaren Träger (32) zu arretieren.

11. Vorrichtung nach Anspruch 10, die des Weiteren wenigstens ein Fixierungsloch (312) (323) aufweist, das in den bewegbaren Trägern (32) und der Trägerführung (31) ausgebildet ist, so dass ein Fixierungsteil sequenziell durch die bewegbaren Träger (32) und die Trägerführung (31) hindurchtreten kann, um zu ermöglichen, dass die bewegbaren Träger (32) in der Trägerführung (31) fixiert werden.

## Revendications

1. Appareil de support pour un dispositif d'affichage, l'appareil de support comprenant :
des premier et second ensembles de suspension (2) espacés l'un de l'autre selon une direction horizontale et agencés pour permettre à l'angle vertical d'un dispositif d'affichage fixé à ceux-ci d'être réglé ; et
un ensemble support (3), à des côtés opposés duquel les ensembles de suspension (2) sont fixés, l'ensemble support (3) comprenant :
un guide de supports (31) ; et
une paire de supports mobiles (32), le premier support mobile étant couplé entre le premier ensemble de suspension et le guide de supports (31) et le second support mobile étant couplé entre le second dispositif de suspension et le guide de supports (31), la paire de supports mobiles (32) étant mobile horizontalement le long du guide de supports (31) pour régler la distance entre les premier et second ensembles de suspension (2),
chaque ensemble de suspension (2) comprenant :
un support mural (23) fixé à une surface d'un mur et couplé à une extrémité de l'un de la paire de supports mobiles (32) ;
un support à canal (22) relié de manière rotative avec le support mural (23) et capable d'être espacé d'une distance prédéterminée vis-à-vis du support mural (23) ;
une liaison supérieure (24) et une liaison inférieure (25) agencées pour relier respectivement les parties supérieure et inférieure du support mural (23) avec les parties supérieure et inférieure du support à canal (22) ; et
un support de fixation (21) couplé au support à canal (22), et ayant un côté avant adapté pour le montage du dispositif d'affichage sur celui-ci,
**caractérisé par le fait que** la liaison supérieure (24) comprend :
une liaison centrale supérieure (241) formé d'une longueur prédéterminée et ayant une première extrémité couplée au support mural (23) et l'autre extrémité couplée au support à canal (22) ; et
une paire de guides de liaison supérieure (242), le premier guide de liaison supérieure ayant une première extrémité couplée de manière rotative au support mural (23) et une seconde extrémité couplée de manière rotative à un côté d'une partie centrale de la liaison centrale supérieure, et le second guide de liaison supérieure ayant une première extrémité couplée de manière rotative au support mural (23) et une seconde extrémité couplée de manière rotative à l'autre côté de la partie centrale de la liaison centrale supérieure (241),
la liaison inférieure (25) comprenant :
une liaison centrale inférieure (251) ayant une extrémité couplée au support à canal (22) ;
une paire de guides de liaison inférieure (252), ayant chacun une première extrémité couplée au support mural (23) et une seconde extrémité couplée de manière rotative à l'autre extrémité de la liaison centrale inférieure (251), et la paire de guides de liaison inférieure (252) étant couplée aux deux côtés de la liaison centrale inférieure (251).

2. Appareil selon la revendication 1, dans lequel le support à canal (22) comprend deux éléments de support se faisant face et couplés l'un à l'autre,
le support à canal (22) étant couplé à une partie arrière au support de fixation (21).

3. Appareil selon la revendication 2, dans lequel le support de fixation (21) est agencé pour être introduit de manière coulissante dans un côté avant du support à canal (22).

4. Appareil selon l'une quelconque des revendications 2 ou 3, dans lequel le support de fixation (21) est couplé au support à canal (22) à l'aide d'un élément de couplage séparé.

5. Appareil selon la revendication 1, dans lequel le mouvement du support mobile (32) et du guide de supports (31) est guidé relativement par une partie pliée formée à chaque bord du support mobile (32) et du guide de supports (31).

6. Appareil selon les revendications 1 ou 5, dans lequel le support mobile (32) est couplé à un côté intérieur de l'ensemble de suspension (2).

7. Appareil selon l'une quelconque des revendications 1 ou 5 ou 6, dans lequel le support mobile (32) est mobile selon une direction horizontale du guide de supports (31) jusqu'à une position où le dispositif d'affichage peut être couplé à l'ensemble de suspension (2).

8. Appareil selon la revendication 2, dans lequel le support mural (23) comprend :
un trou d'élévation (232) ayant une longueur prédéterminée et formé dans chacun des côtés latéraux pliés de celui-ci ; et
un trou de couplage (234) formé dans une partie inférieure des côtés latéraux pliés de celui-ci, le trou de couplage (234) ayant une longueur prédéterminée plus courte que le trou montant (232),
la première extrémité de la liaison centrale supérieure (241) étant couplée au trou d'élévation (232) par un élément d'élévation (29) pour se déplacer vers le haut et vers le bas,
et les premiers extrémités de la paire de guides de liaison (252) sont couplées au trou de couplage (234) par un élément de couplage (27).

9. Appareil selon la revendication 1, comprenant en outre des moyens pour régler une force de frottement générée entre la liaison supérieure (24) et la liaison inférieure (25).

10. Appareil selon la revendication 1, comprenant en outre :
une partie de commande d'intervalle (324) formée sur un côté des supports mobiles (32) ; et
au moins deux fentes (313) formées dans le guide de supports (31), agencées pour recevoir de manière sélective la partie de commande d'intervalle (324) pour fixer les supports mobiles (32) en position.

11. Appareil selon la revendication 10, comprenant en outre au moins un trou de fixation (312) (323) formé dans les supports mobiles (32) et le guide de supports (31), de telle sorte qu'un élément de fixation peut passer de manière séquentielle à travers les supports mobiles (32) et le guide de supports (31) pour permettre aux supports mobiles (32) d'être fixés dans le guide de supports (31).
